# EUROPEAN PATENT APPLICATION

(11) **EP 4 822 329 A1**
(43) Date of publication of application: **14.10.2026**
(21) Application number: 24900976.2
(22) Date of filing: 29.11.2024
(51) Int. Cl.: G01N 1/28

(54) **SI NANOSTRUCTURE STANDARD MATERIAL OF 5 NM OR LESS, AND MANUFACTURING METHOD THEREFOR**

(30) Priority: 06.12.2023 KR 20230175450
(71) Applicant: Kims Reference Corp., Daejeon 34129 (KR)
(72) Inventor: KIM, Kyung Joong, Daejeon 34121 (KR); YANG, Kyoung Mo, Seongnam-si, Gyeonggi-do 13568 (KR)
(74) Representative: Simmons & Simmons LLP (Munich)
(86) International application number: PCT/KR2024/019221
(87) International publication number: WO 2025/121790

(57) **Abstract**

The present invention relates to a Si nanostructure standard material of 5 nm or less, and a manufacturing method therefor, and to a microscope evaluation method using the standard material. Specifically, the present invention provides a standard material having a reduced critical dimension through two etching processes, and thus can improve the evaluation precision of a microscope.

## Description

### [Technical Field]

The present disclosure relates to a nanostructure standard material of 5 nm or less and a manufacturing method therefor, and more particularly, to a microscope evaluation method using the standard material.

### [Background Art]

An atomic force microscope (AFM) and a scanning electron microscope (SEM) are nano-metrology instruments used in semiconductor device manufacturing processes to measure nano-scale critical dimensions (CDs) and pitches. Currently, values measured by the nano-metrology instrument deviate from actual values depending on usage conditions of the nano-metrology instrument.

In particular, with recent advancements in the system semiconductor industry, technology for accurately measuring linewidth (critical dimensions (CDs)), pitches, and step heights of only several nanometers has become one of the most important process analysis issues in the semiconductor industry. Furthermore, as sizes of semiconductor devices decrease and semiconductor devices having even smaller sizes are developed, there is an increasing demand for an accurate definition of differences between measured values and actual values.

In this case, in order to evaluate differences between the actual values and the measured values and to calibrate microscopes, standard materials manufactured to have predetermined size values are used, and the microscopes are calibrated by comparing actual critical dimension values of the standard materials with measured critical dimension values of the standard materials.

However, the conventional standard materials used for microscope evaluation were manufactured to have critical dimensions and pitches greater than or equal to 8 nm to 10 nm, and have difficulties in manufacturing standard materials having critical dimensions and pitches smaller than 8 nm to 10 nm. Accordingly, there has been a problem in that the critical dimensions and pitches of 8 nm or less may not be measured with the conventional standard materials.

### [Disclosure]

### [Technical Problem]

The present disclosure provides a standard material in which a critical dimension is reduced so that performance of a microscope may be evaluated at a finer level.

### [Technical Solution]

In one general aspect, a nanostructure standard material used for evaluating performance of a microscope includes: a plurality of base layers having a predetermined thickness and spaced apart at regular intervals; and a plurality of intermediate layers interposed between each of the plurality of base layers, wherein a multilayer structure is formed by alternately stacking the plurality of base layers and the plurality of intermediate layers.

A convex portion having a relatively high height and a concave portion formed by being recessed to a predetermined depth with a relatively lower height than the convex portion may be formed on one surface of the multilayer structure, each of the convex portion and the concave portion may be formed in a plurality numbers and repeatedly arranged, the convex portion may be formed from the base layer, and the concave portion may be formed from an intermediate layer and a portion of the base layer at both ends interposed with the intermediate layer.

The base layer may be made of Si, and the intermediate layer may be made of SiO₂, and the convex portion and the concave portion may be formed through two etching processes.

The plurality of convex portions may each have different thicknesses, and the thickness of the plurality of convex portions may be configured to increase from one side to the other side along the direction in which the multilayer structure is stacked.

A thickness of the thinnest convex portion among the plurality of convex portions may be 3 nm or more and 5 nm or less.

A thickness of the base layer may be 8 nm or more.

The nanostructure standard material may further include a support layer supporting both ends of the multilayer structure.

In another general aspect, a manufacturing method for a standard material including a plurality of base layers and a plurality of intermediate layers inserted between each of the plurality of base layers for evaluating performance of a microscope includes: a stacking process in which the plurality of base layers and the plurality of intermediate layers are alternately stacked to form a multilayer structure; a first etching process in which the plurality of intermediate layers are removed to a predetermined depth so as to be recessed relative to the base layers; an oxidation process of forming an oxide film having a predetermined thickness on surfaces of the base layers and the intermediate layers; and a second etching process of removing the oxide film.

In the second etching process, a convex portion having a relatively high height and a concave portion formed by being recessed to a predetermined depth with a relatively lower height than the convex portion may be formed on one surface of the multilayer structure, the convex and concave portions may be formed in a repetitive arrangement on one surface of the multilayer structure, the convex portion may be formed from the base layer, and the concave portion may be formed from an intermediate layer and a portion of the base layer at both ends interposed with the intermediate layer.

The base layer may be made of Si, and the intermediate layer may be made of SiO₂.

A thickness of the oxide film may be 1.5 nm or more and 2.5 nm or less. A thickness of the base layer may be 8 nm or more.

In still another general aspect, a method for evaluating performance of a microscope using the standard material, includes: determining a certification value according to a predetermined criterion, the certification value being an actual thickness of the convex portion; seating the standard material on a sample stage of the microscope to illuminate one surface of a multilayer structure in which the convex and concave portions are formed; measuring a thickness of the convex portion with a microscope; and evaluating the performance of the microscope by comparing the certification value with the thickness of the convex portion measured by the microscope.

A criterion for determining the certification value may be determined by a lattice constant value of Si.

### [Advantageous Effects]

A standard material according to an embodiment of the present disclosure is manufactured to have a minimum critical dimension of 5 nm or less, thereby enabling the performance of a microscope to be evaluated at a finer scale.

In addition, by evaluating the performance of a microscope using a standard material according to an embodiment of the present disclosure, it is possible to improve the measurement accuracy and reliability of a nano-measurement instrument.

### [BRIEF DESCRIPTION OF THE DRAWINGS]

FIG. 1 is a schematic front view of a standard material according to one example of the present disclosure.
FIG. 2 is an enlarged view of the region A of FIG. 1.
FIG. 3 is a schematic diagram illustrating a process of manufacturing a standard material according to one example of the present disclosure.
FIG. 4 is a flowchart illustrating a manufacturing process of a standard material according to one example of the present disclosure.
FIG. 5 is a diagram for describing a method for evaluating a microscope using a standard material according to one example of the present disclosure.
FIG. 6 is a graph showing the quantification of spatial resolution measurement of a microscope using a standard material according to one example of the present disclosure.

### [Best Mode]

Hereinafter, the present disclosure will be described in detail with reference to the accompanying drawings. However, this is merely exemplary, and the present disclosure is not limited to the specific embodiments described by way of example.

A standard material 1000 according to one example of the present disclosure is a material used for evaluating the performance of a microscope and may be widely applied in fields of microscope technology that observe nano-scale objects, such as an atomic force microscope (AFM), a scanning electron microscope (SEM), a transmission electron microscope (TEM), and others.

Specifically, the standard material 1000 according to one example of the present disclosure may be used for purposes such as evaluating spatial resolution and calibrating the magnification of a microscope during the performance evaluation of the microscope, thereby providing the advantage of improving the evaluation precision of the microscope.

The standard material 1000 according to one example of the present disclosure and a method for manufacturing the same will be described below.

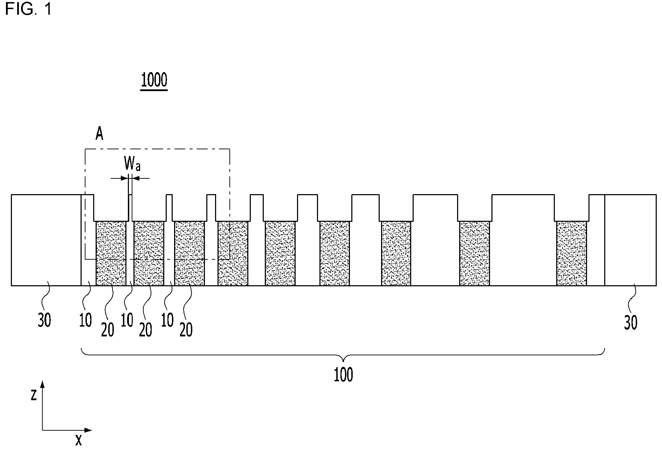

Hereinafter, FIG. 1 is a front view of the standard material 1000 according to one example of the present disclosure, and the standard material 1000 according to one example of the present disclosure will be described with reference thereto.

The standard material 1000 is a nanostructure used for evaluating the performance of the microscope and includes a plurality of base layers 10 and a plurality of intermediate layers 20 interposed between each of the plurality of base layers 10.

The plurality of base layers 10 and the plurality of intermediate layers 20 are stacked alternately to form a multilayer structure 100 composed of a plurality of layers as illustrated in FIG. 1. Furthermore, the standard material 1000 may further include a support layer 30 that supports both ends of the multilayer structure 100 to maintain the shape of the multilayer structure 100. That is, as illustrated in FIG. 1, the multilayer structure 100 may be disposed between the support layers 30 positioned at the far left and far right, respectively, and the multilayer structure 100 may form a multilayer structure in which the base layers 10 and the intermediate layers 20 are stacked alternately.

In this case, the base layer 10 and the intermediate layer 20 may be made of different materials. Through a structure in which the base layer 10 and the intermediate layer 20 made of different materials are alternately stacked, during an etching process, the base layer 10 may remain intact while only a portion of the intermediate layer 20 is removed. Accordingly, a convex portion 300 having a relatively large height and a concave portion 400 having a relatively small height are formed on one surface of the multilayer structure 100, thereby generating a height difference on the one surface of the multilayer structure 100.

When a height difference is present on one surface of the multilayer structure 100 and the surface having the height difference is illuminated and observed using a microscope, a portion having a relatively large height is relatively close to an objective lens of the microscope, thereby forming a bright image, and a portion having a relatively small height is relatively far from the objective lens of the microscope, thereby forming a dark image.

In this way, the spacing having different thicknesses between bright portions and dark portions in an image observed through the microscope is measured, and by comparing the spacing with the certification values of the standard material 100, the spatial resolution evaluation and magnification calibration of the microscope may be performed.

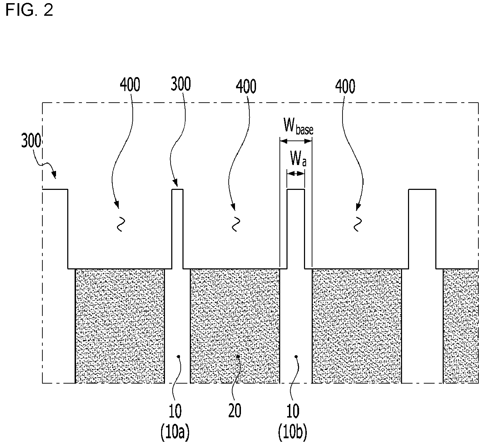

Next, FIG. 2 is an enlarged view of part A of FIG. 1, and the convex portion 300 and the concave portion 400 formed on one surface of the multilayer structure 100 will be described with reference thereto.

The convex portion 300 which is a relatively high portion and the concave portion 400 which is formed by sinking to a certain depth from the height of the convex portion 300 may be provided on one surface of the multilayer structure 100, that is, the upper surface of FIG. 2. The plurality of convex portions 300 and concave portions 400 are provided on one surface of the multilayer structure 100, and have a shape in which one convex portion (300) and one concave portion (400) form a unit and are repeatedly arranged.

In this case, the convex portion 300 may be formed from the base layer 10, and the concave portion 400 may be formed from the intermediate layer 20 and a portion of the base layers 10a and 10b at both ends interposed with the intermediate layer 20.

Looking at the upper surface of FIG. 2, which is the surface of the multilayer structure 100 equipped with the convex portion 300 and the concave portion 400, the surface of the portion equipped with the convex portion 300 is entirely composed of the base layer 10, whereas the surface of the portion equipped with the concave portion 400 has a central portion composed of an intermediate layer 20, the left surface of the central portion is composed of a base layer 10a disposed on the left of the intermediate layer 20, and the right surface of the central portion is composed of a base layer 10b disposed on the right of the intermediate layer 20.

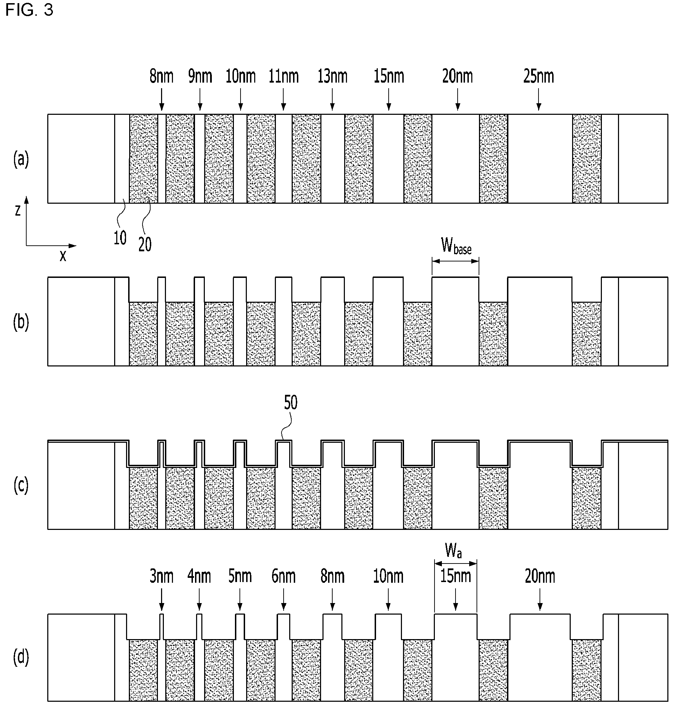

This structure is formed by etching the multilayer structure 100 (first etching process), oxidizing the base layer 10 to form an oxide film (oxidation process), and then re-etching (second etching process). These features will be described later with reference to FIG. 3.

Meanwhile, the plurality of convex portions 300 each have different thicknesses, and the thickness of the multiple convex portions 300 may be configured to increase from one side to the other side along the direction in which the multilayer structure 100 is stacked. In this case, the thickness of the plurality of convex portions 300 may be determined according to a designated certification value, so that the characteristics of the microscope may be evaluated by comparing the measured thickness value of the convex portions 300 with the designated certification value.

In other words, as illustrated in FIG. 1, n convex portions 300 may be formed in the multilayer structure 100. When the convex portions 300 are sequentially referred to as a first convex portion, a second convex portion, ⊚, and an nth convex portion from the leftmost convex portion to the rightmost convex portion, the thicknesses of the first convex portion to the nth convex portion may gradually increase, and the thickness of each convex portion may be determined according to a designated certification value.

The thickness of the first convex portion, which is the thinnest of the n convex portions, may be 3 nm or more and 5 nm or less, and details regarding this will be described later.

Meanwhile, the base layer 10 may be made of silicon (hereinafter referred to as Si), and the intermediate layer 20 may be made of silicon dioxide (hereinafter referred to as SiO₂).

In this case, the Si forming the base layer 10 may be Si purified in a pure form or may be a material grown as a single crystal. Si is a core material of the semiconductor industry, and since single crystal growth and processing technologies are highly developed, it is advantageous for reproducing identical samples and is suitable for adoption as a standard of length.

The intermediate layer 20 may be made of SiO₂ such that a certain portion may be removed through hydrogen fluoride (hereinafter referred to as HF) as illustrated in Equation 1 below.

**[**Equation 1] *SiO*₂+4*HF*→*SiF*₄+2H₂*O*

The standard material 1000 and the method for manufacturing the same according to an example of the present disclosure will be described below with reference to FIG. 3.

FIGS. 3A to 3D are drawings sequentially illustrating the steps of manufacturing the standard material 1000. As illustrated in FIG. 3A, the base layer 10 made of Si and the intermediate layer 20 made of SiO₂ may have the same height and be stacked alternately to form the multilayer structure 100.

In this case, when one surface of the multilayer structure 100, i.e., the upper surface of FIG. 3A, is exposed to HF gas or an aqueous solution containing HF in an etching process (hereinafter referred to as a first etching process), the intermediate layer 20 made of SiO₂ is corroded to a predetermined depth and removed, and as illustrated in FIG. 3B, the intermediate layer 20 has a lower height than the base layer 10 made only of Si.

The surface of the multilayer structure 100 may be oxidized in a state as illustrated in FIG. 3B, and after undergoing this oxidation process, the oxide film 50 may be formed on the surface of the multilayer structure 100 as illustrated in FIG. 3C. When oxidizing the multilayer structure 100 made of Si and SiO₂, the oxide film 50 having a predetermined thickness composed of SiO₂ may be formed on the surface through the following [Equation 2].

**[**Equation 2] *Si*+2*H*₂*O*→*SiO*₂+2*H*₂

After the oxide film 50 is formed, when the re-etching process (hereinafter referred to as the second etching process) is performed, the oxide film 50 made of SiO₂ is corroded and removed.

Hereinafter, the material illustrated in FIG. 3B that has undergone only the first etching process is compared with the standard material 100 according to an example of the present disclosure that has undergone the second etching process shown in FIG. 3D. Even when only the first etching process is performed, the heights of the base layer 10 and the intermediate layer 20 differ from each other, so a relatively high portion and a relatively low portion may be formed. However, when the thickness of the relatively high portion is denoted as W_{base}, there is a problem in that the value of W_{base} may not be manufactured to a level of 5 nm or less, which is the desired level.

This is related to the minimum size at which silicon quantum dots appear. According to the prior art document (F. Iacona, J. Appl. Phys. 88, 8165 (2000)), quantum dots are formed in Si and SiO₂ having a size of 0.9 nm to 2.6 nm, whereas quantum dots are not formed in Si having a size of 8 nm or more, and the Si structure is maintained.

Therefore, it can be seen that, when the thicknesses of the base layer 10 and the intermediate layer 20 are each at least 8 nm, the shape of the structure is maintained, such that the structure can function as a standard material. That is, when only the first etching process is performed, the thickness W_{base} of the relatively high portion, i.e., the base layer 10, may be at least 8 nm, which causes a problem in that the microscope may not evaluate at a unit more precise than 8 nm.

However, when the oxidation process and the second etching process are performed after the first etching process, a portion of the surface of the base layer 10 and the intermediate layer 20 is oxidized to form the oxide film 50 having a predetermined thickness, and when the oxide film 50 is removed through the second etching process, the convex portion 300 having a reduced thickness Wₐ is formed by the thickness of the oxide film formed on the left and right sides of the base layer 100. That is, according to an embodiment of the present disclosure, a standard material 1000 having the reduced thickness W ₐ compared to the thickness W _{base} of the high portion in a material that has undergone only the first etching process may be provided through two etching processes.

The thickness of the base layer 10 may be 8 nm or more to maintain its shape. In this case, the thickness of the oxide film 50 may be 1.5 nm to 2.5 nm. The oxide film 50 may be formed on left and right surfaces of the base layer 10, respectively. When the oxide film 50 is removed, the thickness of the convex portion 300 formed from the base layer 10 may be 3 nm or more and 5 nm or less (e.g., 3 nm corresponding to a value obtained by subtracting 2.5 nm, which is the thickness of the oxide film on the left side, and 2.5 nm, which is the thickness of the oxide film on the right side, from 8 nm, which is the thickness of the base layer 10, and 5 nm corresponding to a value obtained by subtracting 1.5 nm, which is the thickness of the oxide film on the left side, and 1.5 nm, which is the thickness of the oxide film on the right side, from 8 nm, which is the thickness of the base layer 10).

In the manner described above, a standard material according to one example of the present disclosure may be configured such that the thickness of the thinnest convex portion among the plurality of convex portions 300 is 3 nm or more and 5 nm or less.

The multilayer structure 100 may be configured such that the thickness of n convex portions 300 increases from one side of the multilayer structure 100 to the other side, and in order to form convex portions 300 from the base layer 10, the thickness W_{base} of the base layer 10 may also be configured such that it increases from one side of the multilayer structure 100 to the other side.

For example, as illustrated in FIG. 3D, it is assumed that the thicknesses of the first convex portion to the eighth convex portion according to the specified certification value are 3nm, 4nm, 5nm, 6nm, 8nm, 10nm, 15nm, and 20nm, respectively. In order to form eight convex portions having the thicknesses described above, as illustrated in FIG. 3C, the base layer 10 forming each convex portion may be manufactured such that its thickness is 8 nm, 9 nm, 10 nm, 11 nm, 13 nm, 15 nm, 20 nm, and 25 nm, respectively, and as illustrated in FIG. 3C, first to eighth convex portions having thicknesses (3 nm, 4 nm, 5 nm, 6 nm, 8 nm, 10 nm, 15 nm, and 20 nm) corresponding to designated certification values may be formed through a process (oxidation process) of forming an oxide film 50 having a thickness of 2.5 nm and a process (second etching process) of removing the formed oxide film.

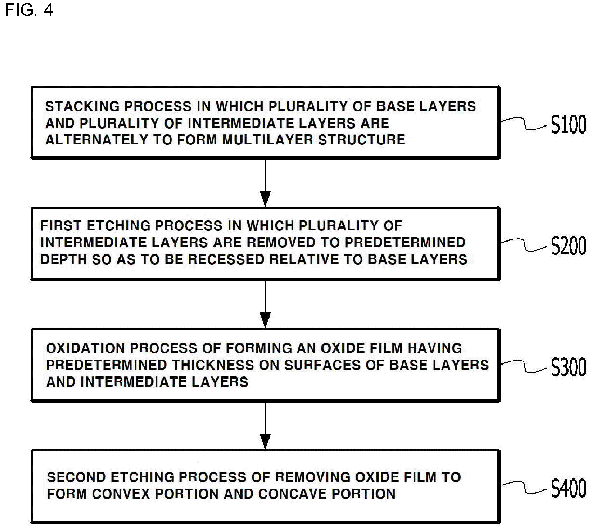

Next, with reference to FIG. 4, the method for manufacturing a standard material 1000 according to an example of the present disclosure will be described.

According to one example of the present disclosure, a stacking process (S100) in which the plurality of base layers 10 and the plurality of intermediate layers 20 are alternately stacked to form the multilayer structure 100; a first etching process (S200) in which the plurality of intermediate layers 20 are removed to a predetermined depth so as to be recessed with respect to the base layer 20; an oxidation process (S300) in which the oxide film 50 having a predetermined thickness is formed on the surface of the base layer 10 and the intermediate layer 20; and a second etching process in which the oxide film 50 is removed to form the relatively high convex portion 300 and the concave portion 400 recessed to a certain depth from the convex portion 300 on one surface of the multilayer structure 100.

As described above, one example of the present disclosure provides the advantage that the thickness of the thinnest convex portion 300 may be formed to 5 nm or less through two etching processes, thereby allowing for more precise evaluation of the microscope.

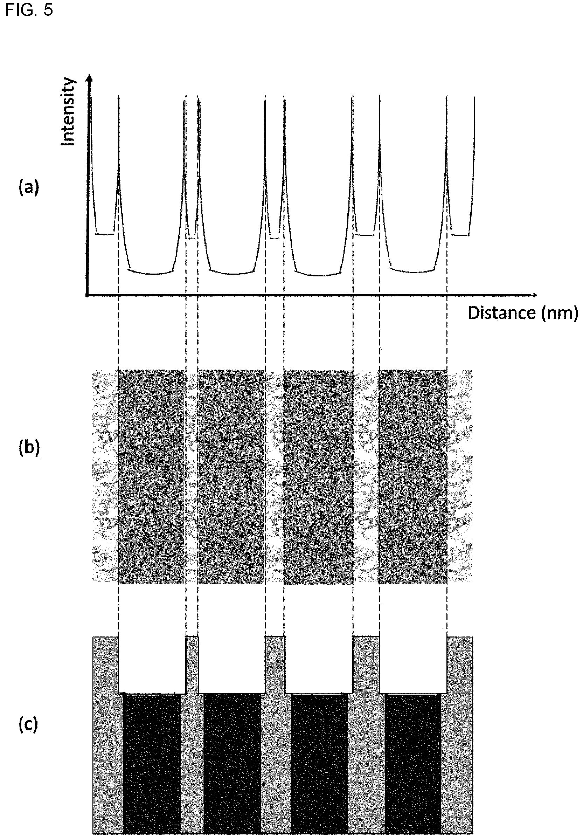

Next, with reference to FIG. 5, a method for evaluating a microscope using the standard material 1000 according to one example of the present disclosure will be described.

FIG. 5A illustrates a contrast distribution map obtained by converting an image of the standard material 1000 captured with a microscope. and FIG. 5B illustrates a structure in which the convex portions 300 and the concave portions 400 having the thickness Wₐ value of the standard material 1000 of FIG. 5C are repeatedly arranged and formed.

A method for evaluating a spatial resolution of a microscope using the standard material 1000 may include: determining a certification value according to a predetermined standard, wherein an actual thickness w-a of the convex portion 300 is referred to as the certification value; seating the standard material on a sample stage of the microscope and illuminating one surface of a multilayer structure in which the convex portion 300 and the concave portion 400 are formed; measuring a thickness of the convex portion 300 using the microscope; and evaluating the spatial resolution of the microscope by comparing the certification value with a measured thickness value w-m of the convex portion 300 measured by the microscope.

When the standard material 1000 is illuminated and observed with a microscope as in FIG. 5A, a bright image or high contrast value is obtained for the convex portion 300 disposed relatively close to the objective lens of the microscope, and a dark image or low contrast value is obtained for the concave portion 400 disposed relatively far from the objective lens of the microscope.

That is, the thickness of the convex portion 300 may be measured through the thickness of the portion where a high contrast value is obtained, and the spatial resolution of the microscope may be evaluated by comparing the measured value regarding the thickness of the convex portion 300 with the actual thickness of the convex portion 300 in FIG. 5B.

In this case, when the actual thickness w-a of the convex portion 300 is called the certification value, the certification value may be determined through a predetermined standard. The predetermined standard for determining the certification value may be determined by the single-crystal Si lattice constant value (α=0.5431020511 nm), and since the certification value is determined based on the single-crystal Si lattice constant, it provides the advantage of enabling accurate microscope evaluation.

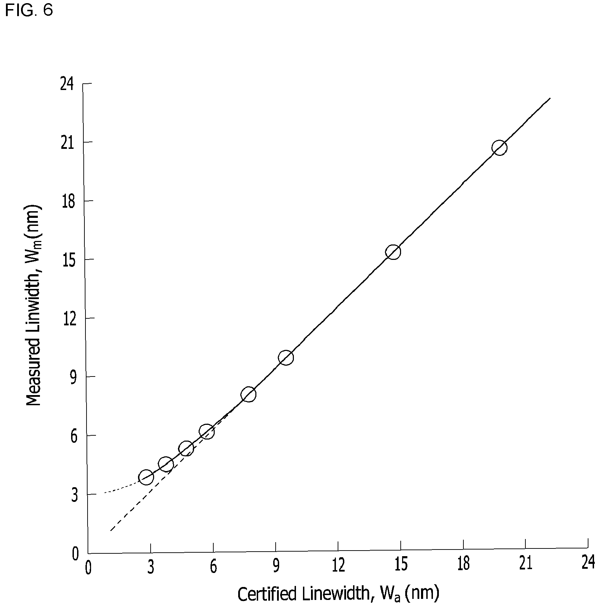

FIG. 6 illustrates a graph that allows the spatial resolution of the microscope to be evaluated using the standard material 1000. Due to factors such as the diffraction limit of light or the edge effect of the electron beam, a point occurs where the resolution may not be achieved below a certain thickness in the microscope, resulting in the resolution lower than the theoretical spatial resolution. Here, the spatial resolution is one of the indicators representing the performance of the microscope. Therefore, by using the standard material 1000 having a thickness of 3 nm to 30 nm and presenting a graph based on the thickness measurement value wₘ measured by the microscope with respect to a certification value wₐ, an actual spatial resolution of the microscope, rather than a theoretical value, may be measured. The slope of the graph illustrates linearity starting from the convex portion 300 with a thicker thickness, but a point appears where it does not exhibit linearity below a convex portion 300 with a specific thickness (~10 nm). The point of saturation varies depending on the performance of the microscope. From this point, the actual spatial resolution of the microscope may be determined through the thickness value measured at the minimum thickness of the certification value. Furthermore, by using the standard material 1000 to evaluate the difference between the actual value and the measured value and correcting the microscope, this may be used to improve the performance of the microscope and calibrate the magnification.

Although exemplary embodiments of the present disclosure has been described with reference to the accompanying drawings, those skilled in the art will appreciate that various modifications and alterations may be made without departing from the spirit or essential feature of the present disclosure. Therefore, it should be understood that the above-mentioned embodiments are exemplary in all aspects but are not limited thereto.

## Claims

1. A nanostructure standard material used for evaluating performance of a microscope, comprising:
a plurality of base layers having a predetermined thickness and spaced apart at regular intervals; and
a plurality of intermediate layers interposed between each of the plurality of base layers,
wherein a multilayer structure is formed by alternately stacking the plurality of base layers and the plurality of intermediate layers.

2. The nanostructure standard material of claim 1, wherein a convex portion having a relatively high height and a concave portion formed by being recessed to a predetermined depth with a relatively lower height than the convex portion are formed on one surface of the multilayer structure,
each of the convex portion and the concave portion are formed in a plurality numbers and repeatedly arranged,
the convex portion is formed from the base layer, and
the concave portion is formed from an intermediate layer and a portion of the base layer at both ends interposed with the intermediate layer.

3. The nanostructure standard material of claim 2, wherein the base layer is made of Si, and the intermediate layer is made of SiO₂, and
the convex portion and the concave portion are formed through two etching processes.

4. The nanostructure standard material of claim 3, wherein the plurality of convex portions each have different thicknesses, and the thickness of the plurality of convex portions is configured to increase from one side to the other side along the direction in which the multilayer structure is stacked.

5. The nanostructure standard material of claim 4, wherein a thickness of the thinnest convex portion among the plurality of convex portions is 3 nm or more and 5 nm or less.

6. The nanostructure standard material of claim 3, wherein a thickness of the base layer is 8 nm or more.

7. The nanostructure standard material of claim 2, further comprising:
a support layer supporting both ends of the multilayer structure.

8. A manufacturing method for a standard material including a plurality of base layers and a plurality of intermediate layers inserted between each of the plurality of base layers for evaluating performance of a microscope, the manufacturing method comprising:
a stacking process in which the plurality of base layers and the plurality of intermediate layers are alternately stacked to form a multilayer structure;
a first etching process in which the plurality of intermediate layers are removed to a predetermined depth so as to be recessed relative to the base layers;
an oxidation process of forming an oxide film having a predetermined thickness on surfaces of the base layers and the intermediate layers; and
a second etching process of removing the oxide film.

9. The manufacturing method of claim 8, wherein, in the second etching process, a convex portion having a relatively high height and a concave portion formed by being recessed to a predetermined depth with a relatively lower height than the convex portion are formed on one surface of the multilayer structure,
the convex and concave portions are formed in a repetitive arrangement on one surface of the multilayer structure,
the convex portion is formed from the base layer, and
the concave portion is formed from an intermediate layer and a portion of the base layer at both ends interposed with the intermediate layer.

10. The manufacturing method of claim 8, wherein the base layer is made of Si, and the intermediate layer is made of SiO₂.

11. The manufacturing method of claim 8, wherein a thickness of the oxide film is 1.5 nm or more and 2.5 nm or less.

12. The manufacturing method of claim 8, wherein a thickness of the base layer is 8 nm or more.

13. A method for evaluating performance of a microscope using the standard material of claim 2, comprising:
determining a certification value according to a predetermined criterion, the certification value being an actual thickness of the convex portion;
seating the standard material on a sample stage of the microscope to illuminate one surface of a multilayer structure in which the convex and concave portions are formed;
measuring a thickness of the convex portion with a microscope; and
evaluating the performance of the microscope by comparing the certification value with the thickness of the convex portion measured by the microscope.

14. The method of claim 13, wherein a criterion for determining the certification value is determined by a lattice constant value of Si.
